# EUROPÄISCHE PATENTSCHRIFT

(11) **EP 3 152 178 B1**
(45) Veröffentlichungstag und Bekanntmachung des Hinweises auf die Patenterteilung: **29.08.2018**
(21) Anmeldenummer: 15738815.8
(22) Anmeldetag: 05.06.2015
(51) Int. Cl.: C04B 20/06

(54) **VERFAHREN ZUR EXPANSION VON SANDKORNFÖRMIGEM ROHMATERIAL**
METHOD FOR EXPANDING RAW MATERIAL IN THE FORM OF SAND GRAINS
PROCÉDÉ POUR L'EXPANSION D'UNE MATIÈRE PREMIÈRE AYANT LA FORME DE GRAINS DE SABLE

(30) Priorität: 05.06.2014 AT 5008914 U
(43) Veröffentlichungstag der Anmeldung: 12.04.2017
(73) Patentinhaber: Binder + Co. AG, 8200 Gleisdorf (AT)
(72) Erfinder: TSCHERNKO, Harald, A-8200 Gleisdorf (AT); PUSCH, Markus Alfred, A-8051 Graz (AT); NEUKAM, Bernhard, A-8046 Stattegg (AT); BRUNNMAIR, Ernst, Erwin, A-8045 Graz (AT)
(74) Vertreter: KLIMENT & HENHAPEL
(86) Internationale Anmeldenummer: PCT/AT2015/050143
(87) Internationale Veröffentlichungsnummer: WO 2015/184482

(56) Entgegenhaltungen:
- WO-A1-2013/053635
- DE-A1- 19 722 906
- US-A- 2 625 512

## Beschreibung

### GEBIET DER ERFINDUNG

Die Erfindung bezieht sich auf ein Verfahren zur Expansion von sandkornförmigem Rohmaterial, bei dem das Rohmaterial durch einen, mit Mittel zur Beheizung versehenen, im Wesentlichen vertikalen erhitzten Schacht, in welchem eine Schachtströmung vorherrscht, nach unten fällt, sowie auf ein Dosierelement, welches mit einem im Wesentlichen vertikalen Schacht und einer Förderleitung verbindbar ist.

### STAND DER TECHNIK

Ein Verfahren zur Herstellung eines geblähten Granulats aus sandkornförmigem Rohmaterial ist in der WO 2013/053635 A1 offenbart, deren Aufgabe darin besteht, eine geschlossene Oberfläche des geblähten Granulats kontrollierbar einzustellen, so dass das geblähte Granulat keine bzw. kaum Hygroskopie aufweist. Außerdem soll die Möglichkeit geschaffen werden, die Oberflächenstruktur des geblähten Granulats und damit die Rauigkeit gezielt zu beeinflussen. Dazu schlägt diese Druckschrift vor, mehrere entlang der Fallstrecke des sandkornförmigen Rohmaterials angeordnete und unabhängig voneinander steuerbare Heizelemente vorzusehen und entlang der Fallstrecke eine Temperaturdetektion durchzuführen, wobei die Heizelemente unterhalb des Bereiches, in dem der Blähvorgang stattfindet, in Abhängigkeit der detektierten Temperatur gesteuert werden. Der Abtransport des geblähten Granulats aus dem unteren Ende der Fallstrecke wird über eine pneumatische Förderleitung gewährleistet, in die die Fallstrecke mündet.

Durch die vertikale Ausrichtung des Schachtes und auf Grund der zusätzlichen Einbringung bzw. Absaugung von den Blähvorgang begleitenden Prozessgasen treten innerhalb des Schachtes Strömungen auf, die auf das sandkornförmige Rohmaterial einwirken. Insbesondere die Ausbildung einer wandnahen aufwärts gerichteten Grenzschichtströmung hat einen positiven Effekt auf die Qualität des Blähvorganges, denn durch diese Grenzschichtströmung wird ein Anbacken des sandkornförmigen Rohmaterials an der Wand des Schachtes verhindert. Wird der Expansionsschacht nach oben hin geschlossen, stellt sich zusätzlich zur nach oben gerichteten Grenzschichtströmung eine mittige nach unten gerichtete Kernströmung ein. Diese Kernströmung verhindert einen Teil der oben beschriebenen Grenzschichtströmung und hat deshalb Anbackungen zur Folge. Durch die bislang bekannte Absaugung / Einblasung von Prozessgas aus dem / in den Kopfbereich des Schachtes kann der Einfluss der Kernströmung verringert werden.

Auf Grund der direkten Anbindung des Schachtes an eine pneumatische Förderleitung werden jedoch Druckschwankungen, in etwa hervorgerufen durch die Reinigungszyklen eines Filters in der Förderleitung, erzeugt, welche direkt an die Luft im Schacht weiter gegeben werden. Dadurch entstehen in Bereichen des Schachtes Querströmungen, welche den positiven Effekt der Grenzschichtströmung verhindern und damit zu Anbackungen führen, welche die Qualität des Blähprozesses wesentlich verschlechtern und welche nur durch aufwändige Instanthaltungsmaßnahmen bei Stillstand des Prozesses beseitigt werden können.

Als Nachteil des Standes der Technik ist somit der ungleichmäßige Blähvorgang und die Bildung von Anbackungen an den Schachtwänden zu sehen, welche auf Grund von Querströmungen, bedingt durch z.B. Druckschwankungen in der nachfolgenden pneumatischen Förderleitung, auftreten. Auch die bekannte Absaugung / Einblasung von Prozessgasen aus dem / in den Kopfbereich des Schachtes kann diesen Effekt nicht verhindern.

### DARSTELLUNG DER ERFINDUNG

Die der vorliegenden Erfindung zugrundeliegende Aufgabenstellung besteht darin, ein Verfahren zur Herstellung eines geblähten Granulats aus sandkornförmigem Rohmaterial und ein Dosierelement zur Verbindung des Schachts mit der Förderleitung bereitzustellen, die die beschriebenen Nachteile nicht aufweisen und dafür sorgen, dass sich Druckschwankungen aus der Förderleitung nicht auf die Qualität des geblähten Granulats auswirken. Das Verfahren soll einen störungsfreien und instandhaltungsarmen Betrieb gewährleisten. Das Dosierelement soll sich durch eine einfache und zuverlässige Konstruktion auszeichnen. Des Weiteren soll die Erfindung auf bestehenden Anlagen ohne viel Aufwand nachrüstbar sein.

Dieses Ziel wird mit dem eingangs erwähnten Verfahren dadurch erreicht, dass zwischen dem Schacht und der Förderleitung ein Dosierelement angebracht ist, in welchem die Menge des Granulats welche vom Schacht in die Förderleitung übergeht über Mittel zur Regelung geregelt wird, so dass eine definierte Materialansammlung des Granulats im Dosierelement als Puffer ausgebildet wird, welche die Schachtströmung von der Förderströmung entkoppelt.

Die Erfindung basiert darauf, dass durch eine Materialansammlung, die mit einfachen Mitteln gebildet werden kann, etwa durch Aufstauen des hinunterfallenden Granulats, im Bereich oberhalb der Materialansammlung Druckverhältnisse eingestellt werden können, die im normalen Betrieb nicht mehr von den Druckschwankungen in der Förderleitung beeinflusst werden. Es versteht sich von selbst, dass durch die Ausbildung einer Materialansammlung keine vollständige gasdichte Abdichtung des Schachts gegenüber der Förderleitung erzielt werden kann, jedoch ist der Abdichtungseffekt hinreichend, um eine Übertragung von Druckschwankungen der Förderströmung auf die Schachtströmung zu verhindern.

Durch das Anbringen von Mitteln zur Regelung kann die Höhe der Materialansammlung gezielt beeinflusst werden und auf den optimalen Wert für den aktuellen Prozess eingestellt werden, wobei Untergrenzen nicht unterschritten und Obergrenzen nicht überschritten werden dürfen.

Bezüglich des sandkornförmigen Rohmaterials können nicht nur mineralische Sande verwendet werden, in denen Wasser als Treibmittel gebunden ist, wie beispielsweise Perlit oder Obsidiansand. Ebenso kann es sich um mineralischen Staub handeln, der mit wasserhaltigem mineralischem Bindemittel gemischt ist, wobei in diesem Fall das wasserhaltige mineralische Bindemittel als Treibmittel wirkt. Der Blähvorgang kann in diesem Fall folgendermaßen vor sich gehen: Der mineralische Staub, der aus relativ kleinen Sandkörnern von beispielsweise 20 pm Durchmesser besteht, bildet mit dem Bindemittel größere Körner von beispielsweise 500 pm. Bei einer kritischen Temperatur werden die Oberflächen der Sandkörner des mineralischen Staubs plastisch und bilden geschlossene Oberflächen der größeren Körner bzw. verschmelzen zu solchen. Da die geschlossene Oberfläche eines einzelnen größeren Korns in der Regel insgesamt kleiner ist als die Summe aller Oberflächen der einzelnen Sandkörner des mineralischen Staubs, welche an der Bildung dieses größeren Korns beteiligt sind, wird auf diese Weise Oberflächenenergie gewonnen bzw. nimmt das Verhältnis von Oberfläche zu Volumen ab. In diesem Moment liegen also größere Körner mit jeweils einer geschlossenen Oberfläche vor, wobei die Körner eine Matrix aus mineralischem Sandstaub sowie wasserhaltiges mineralisches Bindemittel aufweisen. Da die Oberflächen dieser größeren Körner nach wie vor plastisch sind, kann in der Folge der sich ausbildende Wasserdampf die größeren Körner blähen. D.h. das wasserhaltige mineralische Bindemittel wird als Treibmittel verwendet. Alternativ kann auch mineralischer Staub mit einem Treibmittel gemischt werden, wobei das Treibmittel mit mineralischem Bindemittel, welches vorzugsweise Wasser enthält, vermengt ist. Als Treibmittel kann beispielsweise CaCO3 Verwendung finden. Der Blähvorgang kann in diesem Fall analog zum oben geschilderten vor sich gehen: Der mineralische Staub, welcher eine relativ kleine Sandkorngröße (beispielsweise 20 pm Durchmesser) aufweist, bildet mit dem Treibmittel und dem mineralischen Bindemittel größere Körner (beispielsweise 500 pm Durchmesser). Bei Erreichen einer kritischen Temperatur werden die Oberflächen der Sandkörner des mineralischen Staubs plastisch und bilden eine geschlossene Oberfläche der größeren Körner bzw. verschmelzen zu einer solchen. Die geschlossenen Oberflächen der größeren Körner sind nach wie vor plastisch und können nun vom Treibmittel gebläht werden. Falls das mineralische Bindemittel wasserhaltig ist, kann dieses als zusätzliches Treibmittel fungieren. Daher ist es bei einer bevorzugten Ausführungsform des erfindungsgemäßen Verfahrens vorgesehen, dass es sich bei dem mineralischem Material mit Treibmittel um mineralisches Material handelt, in dem Wasser gebunden ist und als Treibmittel wirkt, oder um mineralischen Staub gemischt mit wasserhaltigem mineralischen Bindemittel, welches als Treibmittel wirkt, oder um mineralischen Staub gemischt mit einem Treibmittel, welches mit mineralischem Bindemittel vermengt ist, wobei das mineralische Bindemittel vorzugsweise Wasser beinhaltet und als zusätzliches Treibmittel wirkt. Um das dargestellte Verfahren möglichst effizient durchführen zu können, ist es bevorzugt neben einem Schachtofen mehrere Heizzonen mit (unabhängig voneinander) regelbaren Heizelementen sowie eine intelligente Regel- und Steuereinheit vorzusehen. Dies steuert die Heizelemente bevorzugt in Abhängigkeit von gemessenen Temperaturen entlang des Ofenschachtes.

Das erfindungsgemäße Verfahren kann beispielsweise wie in der WO 2013/053635 A1 ausgebildet sein. Deren Offenbarung wird daher zur Gänze in diese Beschreibung aufgenommen.

Eine bevorzugte Ausführungsvariante zeichnet sich dadurch aus, dass die Materialansammlung, welche als Puffer dient, derart ausgeführt ist, dass zumindest ein erster Querschnitt des Dosierelementes über eine definierte Höhe vollständig mit geblähtem Granulat aus dem Schacht ausgefüllt wird. Diese Art des Puffers zeichnet sich dadurch aus, dass er besonders einfach herzustellen ist. Dabei wird das aus dem Schacht fallende geblähte Granulat aufgestaut, bis eine gewisse Höhe erreicht wurde und die dadurch entstehende Materialansammlung dient als Puffer. Die Höhe der Materialansammlung kann beispielsweise durch den Ort einer Messeinrichtung definiert werden, die im Dosierelement angebracht ist und das Vorhandensein einer Materialansammlung detektiert. Der Ort der Messeinrichtung entspricht im Betriebszustand der Dosiereinrichtung einer bestimmten Höhe innerhalb der Dosiereinrichtung und damit auch einer bestimmten Höhe einer dann vorhandenen Materialansammlung.

Gemäß einer weiteren bevorzugten Ausführungsvariante wird die Förderströmung durch eine Absaugeinrichtung erzeugt. Wird die Absauganlage insbesondere an dem dem Dosierelement abgewandten Ende angebracht, ergibt sich eine Förderströmung über die gesamte Länge der Förderleitung, wobei auch andere Elemente, wie beispielsweise Filteranlagen, in der Förderleitung angebracht sein können.

In einer weiteren bevorzugten Ausführungsvariante ist in der Förderleitung eine Trennvorrichtung, vorzugsweise ein Gaszyklon, vorgesehen, durch welche das geblähte Granulat von der Förderströmung abgeschieden wird. Da es sich bei dem geblähten Granulat um das Endprodukt des Verfahrens handelt, ist die gebündelte Ausbringung aus der Förderströmung, insbesondere durch einen Gaszyklon, vorteilhaft, da auf diese Weise ein Behälter, wie beispielsweise einem Silo, zum weiteren Transport oder zur weiteren Verarbeitung des Granulats, in einfacher Weise befüllt werden kann.

Eine weitere bevorzugte Ausführungsvariante sieht vor, dass die Schüttdichte des Granulats als Qualitätsmerkmal des Expansionsvorganges bestimmt wird, um die Mittel zur Beheizung nach zu regeln oder die Aufgabe von Rohmaterial zu reduzieren. Eine solche Vorgehensweise ermöglicht es durch kontinuierliche Kontrolle des geblähten Granulats Rückschlüsse auf die Bedingungen im Schacht ziehen zu können. Weicht die Schüttdichte erheblich von den eingestellten Standardparametern ab, so kann dies einerseits an einer anderen Zusammensetzung des sandkornförmigen Rohmaterials liegen, was durch Änderung der Temperatur in den Mitteln zur Beheizung ausgeglichen werden kann, oder an Anbackungen an den Innenseiten des Schachtes. Tritt letzterer Fall ein, kann die Aufgabe von Rohmaterial reduziert, vorzugsweise ganz gestoppt, werden, um Wartungsarbeiten durchführen zu können.

Gemäß einer weiteren besonders bevorzugten Ausführungsvariante erhöht oder verringert das Mittel zur Regelung über eine lokale Beeinflussung der Förderströmung im Dosierelement die Fördermenge des geblähten Granulates in der Förderleitung. Eine derartige Regelung der Fördermenge kann ohne bewegliche Teile auskommen, die in Berührung mit dem geblähten Granulat kommen und ist dadurch widerstandsfähig gegen Verstopfungen. Eine Verringerung der Fördermenge führt zu einer Vergrößerung der Materialansammlung, während bei einer Erhöhung der Fördermenge der gegenteilige Fall eintritt.

In einer weiteren besonders bevorzugten Ausführungsvariante wird die Höhe der Materialansammlung im Dosierelement detektiert und diese Information an das Mittel zur Regelung übermittelt. Dadurch kann die Höhe der Materialansammlung über die Beeinflussung der Fördermenge variiert werden bzw. eine ungleichmäßige Aufgabe von Rohmaterial ausgeglichen werden, so dass die Höhe der Materialansammlung annähernd konstant bleibt.

Gemäß einer weiteren bevorzugten Ausführungsvariante wird Prozessluft aus dem Kopfbereich des Schachtes abgesaugt, um den zum Kopfbereich gerichteten Teil der Schachtströmung zu erhöhen und damit zu stabilisieren. Durch eine solche Ausführung wird der positive Effekt der nicht auftretenden Druckschwankungen mit einer Reduzierung der nach unten gerichteten Kernströmung kombiniert, wodurch die Strömungsverhältnisse im Schacht unabhängig von äußeren Einflüssen weitgehend konstant gehalten werden können.

Eine weitere bevorzugte Ausführungsvariante der Erfindung sieht vor, dass Prozessluft in den Kopfbereich des Schachtes eingeblasen oder eingesaugt wird, um den zum Kopfbereich gerichteten Teil der Schachtströmung zu stabilisieren. Dies stellt eine weitere Möglichkeit dar die Strömungsverhältnisse im Schacht annähernd konstant zu halten und wirkt sich durch die gleichzeitige Reduzierung der aus der Förderleitung stammenden Druckschwankungen positiv auf die Qualität des geblähten Granulates aus.

Das erfindungsgemäße Dosierelement ist dadurch gekennzeichnet, dass es einen Materialbehälter, welcher über einen Schachtanschluss mit dem Schacht verbindbar ist und eine Längsachse aufweist, einen Förderabschnitt, welcher über einen Förderanschluss mit der Förderleitung verbindbar ist, und Mittel zur Regelung umfasst, die so ausgebildet sind, dass im Bereich des Materialbehälters eine Materialansammlung hergestellt wird, wenn Granulat in den Materialbehälter gelangt. Durch den Schachtanschluss kann das Dosierelement mit dem Schacht verbunden werden, so dass geblähtes Granulat in den Materialbehälter gelangt. Über den Förderabschnitt gelangt das Granulat zum Förderanschluss über welchen das Dosierelement mit der Förderleitung verbunden werden kann, um den Abtransport des durch das Dosierelement gelangten geblähten Granulats sicher zu stellen. Durch die Mittel zur Regelung wird die Fördermenge, die durch das Dosierelement gelangt, in solcher Weise beeinflusst, dass sich im Materialbehälter eine Materialansammlung ausbildet, indem mehr Granulat aus dem Schacht in den Materialbehälter fällt, als über den Förderanschluss aus dem Dosierelement abgeführt wird. Hat die Materialansammlung eine gewisse definierte Höhe erreicht, so wird die Fördermenge durch das Dosierelement annähernd der Menge des Granulats entsprechen, die aus dem Schacht in den Materialbehälter fällt.

Eine erfindungsgemäßen Anlage kann so ausgebildet sein, dass der im Wesentlichen vertikale erhitzbare Schacht über den Schachtanschluss mit dem Materialbehälter des Dosierelementes, in welchem sich Mittel zur Regelung der Fördermenge befinden, verbunden ist und dass der Förderabschnitt des Dosierelementes über den Förderanschluss mit der pneumatischen Förderleitung verbunden ist.

Die eingangs gestellte Aufgabe lässt sich also sowohl mit einem erfindungsgemäßen Dosierelement alleine als auch mit einer das Dosierelement enthaltenden erfindungsgemäßen Anlage lösen. Daher betrifft die Erfindung auch eine Anlage zur Durchführung eines erfindungsgemäßen Verfahrens mit einem Dosierelement welches mit einem im Wesentlichen vertikalen erhitzbaren Schacht und einer pneumatischen Förderleitung verbunden ist, wobei erfindungsgemäß vorgesehen ist, dass das Dosierelement einen Materialbehälter, welcher über einen Schachtanschluss mit dem Schacht verbunden ist und eine Längsachse aufweist, einen Förderabschnitt, welcher über einen Förderanschluss mit der Förderleitung verbunden ist, und Mittel zur Regelung umfasst, die so ausgebildet sind, dass im Bereich des Materialbehälters eine Materialansammlung hergestellt wird, wenn Granulat in den Materialbehälter gelangt.

Gemäß einer bevorzugten Ausführungsvariante des erfindungsgemäßen Dosierelementes bzw. einer erfindungsgemäßen Anlage wird der Förderabschnitt quer zur Längsachse des Schachtes durch den Materialbehälter geführt. Diese Art und Weise der Verbindung von Förderabschnitt und Materialbehälter zeichnet sich dadurch aus, dass keine komplizierte Konstruktion notwendig ist. Der Materialbehälter kann beispielsweise aus Blechplatten zusammengeschweißt werden und muss nur so dimensioniert werden, dass seine Abmessungen größer sind als der Durchmesser des Förderabschnitts.

In einer weiteren bevorzugten Ausführungsvariante des erfindungsgemäßen Dosierelementes bzw. einer erfindungsgemäßen Anlage ist der Förderabschnitt auf der dem Förderanschluss gegenüberliegenden Seite mit der umgebenden Atmosphäre verbindbar, wodurch die Absauganlage zur Herstellung der Förderströmung Umgebungsluft ansaugen und durch die Förderleitung transportieren kann.

Gemäß einer weiteren besonders bevorzugten Ausführungsvariante des erfindungsgemäßen Dosierelementes bzw. einer erfindungsgemäßen Anlage weist der Förderabschnitt auf der dem Schachtanschluss entgegengesetzten Seite zumindest eine Öffnung auf, um den Übertritt von geblähtem Granulat in den Förderabschnitt zu gewährleisten. Eine derartige Ausführung gewährleistet, dass das Granulat vom Materialbehälter nur über die Saugwirkung der Förderströmung in den Förderabschnitt gelangt und dass das Granulat, bevor es zu der zumindest einen Öffnung gelangt, einen möglichst langen Weg zurücklegt.

Eine weitere besonders bevorzugte Ausführungsvariante des erfindungsgemäßen Dosierelementes bzw. einer erfindungsgemäßen Anlage sieht vor, dass im Bereich des Materialbehälters eine Messeinrichtung angebracht ist, mit welcher die Höhe der Materialansammlung detektiert werden kann und die mit dem Mittel zur Regelung der Fördermenge gekoppelt ist. Dadurch kann die Fördermenge, je nach Höhe der Materialansammlung über das Mittel zur Regelung erhöht oder verringert werden. Wird eine Mindesthöhe unterschritten wird die Fördermenge gedrosselt, wird eine Maximalhöhe überschritten, so wird die Fördermenge erhöht.

Gemäß einer weiteren besonders bevorzugten Ausführungsvariante eines erfindungsgemäßen Dosierelementes bzw. einer erfindungsgemäßen Anlage ist das Mittel zur Regelung der Fördermenge als inneres Rohr, welches innerhalb des Förderabschnitts angeordnet ist, mit einer sich darin befindlichen Regelklappe ausgeführt ist. Durch diese einfache Gestaltung des Mittels zur Regelung ist eine Regelung der Fördermenge über das Verstellen der Klappe möglich. Das innere Rohr ist vorzugsweise gleich lang wie der Förderabschnitt und im Betriebszustand auf derselben Seite wie der Förderabschnitt mit der Atmosphäre verbunden, so dass auch durch das innere Rohr Umgebungsluft angesaugt werden kann. Außerdem ist es vorteilhaft, das innere Rohr konzentrisch zum Förderabschnitt anzubringen, um eine gleichmäßige Saugwirkung zu erreichen.

In einer weiteren besonders bevorzugten Ausführungsvariante eines erfindungsgemäßen Dosierelementes bzw. einer erfindungsgemäßen Anlage ist die Regelklappe so ausgebildet, dass sie einerseits verschließbar ist und damit den durchströmten Querschnitt des inneren Rohres verkleinert, wenn eine Überschreitung einer definierten Höhe der Materialansammlung von der Messeinrichtung detektiert wird, um die Fördermenge zu erhöhen und damit die Höhe der Materialansammlung zu verringern, und andererseits öffenbar ist und damit den durchströmten Querschnitt des inneren Rohres vergrößert, wenn eine Unterschreitung einer definierten Höhe der Materialansammlung von der Messeinrichtung detektiert wird, um die Fördermenge zu vermindern und damit die Höhe der Materialansammlung zu vergrößern. Dadurch, dass die Regelklappe denselben Durchmesser aufweist wie das innere Rohr, lässt sich ein durchströmter Querschnitt einstellen. Steht die Regelklappe normal zur Längsachse des inneren Rohres, so gibt es keinen durchströmten Querschnitt und es entsteht ein starker Sog im Bereich zwischen dem inneren Rohr und der Innenfläche des Förderabschnittes, wodurch mehr geblähtes Granulat aus dem Materialbehälter eingesaugt wird. Steht die Regelklappe parallel zur Längsachse des inneren Rohres, so herrscht über den gesamten Querschnitt des Förderabschnittes dieselbe Sogwirkung und es gelangt nur wenig Granulat in den Förderabschnitt.

### KURZE BESCHREIBUNG DER FIGUREN

Im Anschluss folgt nun eine detaillierte Beschreibung eines erfindungsgemäßen Verfahrens und einer erfindungsgemäßen Vorrichtung. Dabei zeigt
- Fig. 1: eine schematische Abbildung einer erfindungsgemäßen Anlage,
- Fig. 2: eine detaillierte Ansicht eines erfindungsgemäßen Dosierelementes,
- Fig. 3: eine Schnittansicht eines erfindungsgemäßen Dosierelementes nach Linie AA in Fig. 2.

### WEGE ZUR AUSFÜHRUNG DER ERFINDUNG

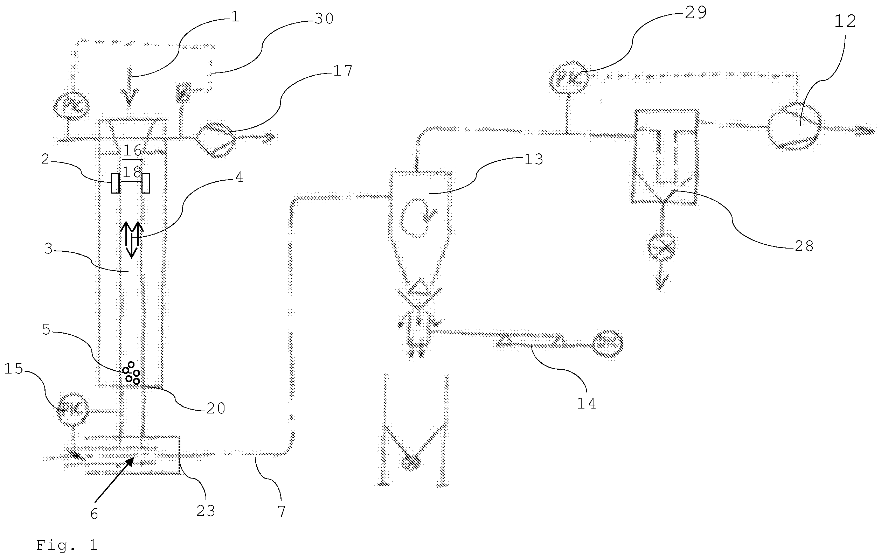

Figur 1 zeigt eine Anlage zu Expansion von sandkornförmigen Rohmaterial 1. Dabei fällt das Rohmaterial 1 durch einen vertikalen Schacht 3, welcher mit Mitteln 2 zur Beheizung, in der vorliegenden Ausführungsvariante werden mehrere elektrische Widerstandsheizungen 2 verwendet, beheizbar ist. Die Aufgabe des Rohmaterials erfolgt im Kopfbereich 16 des Schachtes 3. Dadurch, dass die Widerstandsheizungen 2 einzeln steuerbar sind, lässt sich längs des Schachtes 3 ein bestimmtes Temperaturprofil einstellen. Durch die Wärmestrahlung, die vom Schacht 3 auf das Rohmaterial 1 wirkt, expandiert das Rohmaterial 1 zu geblähtem Granulat 5. Im Schacht 3 stellt sich durch die erhitzen Wände des Schachtes 3 und die entstehenden Prozessluft 18 eine Schachtströmung 4 ein, die aus einer wandnahen Grenzschichtströmung in Richtung des Kopfbereichs 16 und einer zentralen Kernströmung in Richtung des Schachtanschlusses 20 besteht.

Im Kopfbereich 16 des Schachtes 3 ist eine weitere Absaugeinrichtung 17 vorgesehen, welche Prozessluft 18 aus dem Kopfbereich 16 absaugt und damit die Schachtströmung 4 verbessert. Zusätzlich ist noch ein Regelkreis 30 mit der weiteren Absaugeinrichtung 17 gekoppelt, der den Anteil an abgesaugter Prozessluft 18 und angesaugter Umgebungsluft regelt. Ebenso kann zur Stabilisierung der Schachtströmung 4 Prozessluft 18 in den Kopfbereich 16 eingeblasen werden, entweder durch diese weitere Absaugeinrichtung 17 oder durch eine weitere, hier nicht dargestellte Einrichtung.

Am unteren Ende des Schachtes 3 befindet sich ein Dosierelement 6, welches die Menge des Granulats 5, welche vom Schacht 3 in die pneumatische Förderleitung 7 gefördert wird,_regelt. Das Dosierelement 6 weist an der Verbindungsstelle mit dem Schacht 3 einen Schachtanschluss 20 auf und an der Verbindungsstelle mit der Förderleitung 7 einen Förderanschluss 23. Ebenfalls ist in dem Teil des Dosierelements 6, welches an den Schacht 3 grenzt, eine Messeinrichtung 15 angebracht, über deren Messdaten die Fördermenge reguliert wird.

An einem Ende der pneumatische Förderleitung 7 ist eine Absaugeinrichtung 12 angebracht, die vorzugsweise als Ventilator ausgeführt ist, die Umgebungsluft vom anderen Ende, welches zur Umgebung hin offen ausgeführt ist, der Förderleitung 7 durch diese saugt und so geblähtes Granulat 5 befördert. Innerhalb dieser Förderleitung 7 ist ein Gaszyklon 13 angeordnet, über welchen das Granulat 5 aus der Förderleitung abgeschieden wird. In der Förderleitung 7 befindet sich eine Filteranlage 28, die bevorzugter Weise zwischen Gaszyklon 13 und Absaugeinrichtung 12 angeordnet ist, die kleine Partikel aus der Förderleitung 7 abscheidet. Über eine weitere Messeinrichtung 29 wird, durch Messen des Differenzdruckes, die Fördermenge der Absaugeinrichtung 12 so gesteuert, dass die Strömungsgeschwindigkeit in der Förderleitung 7 auch bei Verschmutzung der Filteranlage 28 konstant bleibt.

Die Fig. 1 zeigt, dass bei dieser Ausführungsvariante zusätzlich eine Wiegeeinrichtung 14, die, bezogen auf den Fluss des Granulats 5, nach dem Gaszyklon 13 angeordnet ist, vorgesehen ist, mit der das Gewicht und damit die Schüttdichte des abgeschiedenen geblähten Granulats 5 bestimmt werden kann. Über diese Messung kann ein Rückschluss auf die Qualität des Blähvorganges gezogen werden und dementsprechend wird entweder die Aufgabe von Rohmaterial 1 reduziert, bevorzugter Weise gänzlich gestoppt, oder die Leistung der Widerstandsheizungen 2 wird in einem bestimmten Bereich des Schachtes 3 erhöht. Alternative Ausführungsvarianten der Erfindung sehen keine Wiegeeinrichtung 14 vor, so dass das geblähte Granulat 5 direkt aus dem Gaszyklon 13 in einen Behälter, vorzugsweise einen Silo, eingebracht wird.

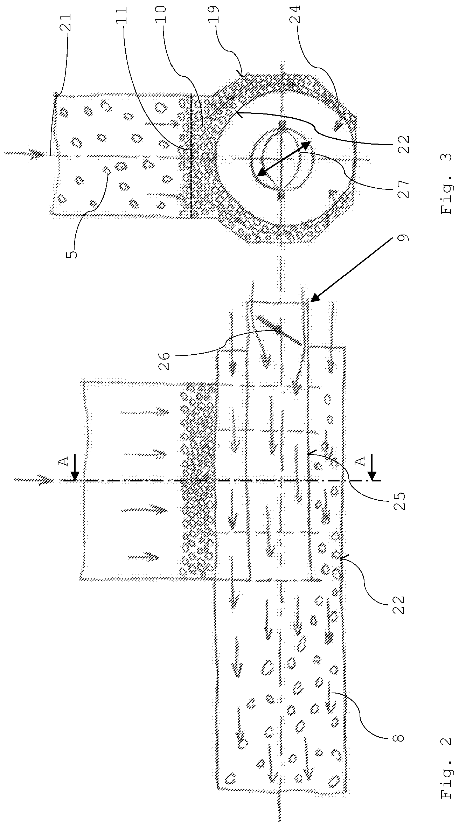

Die Figuren 2 und 3 zeigen nun eine detaillierte Ansicht des Dosierelementes 6. In Figur 3 ist eine der Hauptfunktionen des Dosierelementes 6 abgebildet: die Bildung einer Materialansammlung 10. Geblähtes Granulat 5 fällt aus dem Schacht 3 über den Schachtanschluss 20 (Fig. 1) in einen ersten Teil des Dosierelementes, den Materialbehälter 19, der einer Längsachse 21 aufweist. Dadurch, dass die Menge des Granulats 5 aus dem Schacht 3 in einem ersten Prozessschritt höher ist, als die Menge an Granulat 5, die durch das Dosierelement 6 in die Förderleitung 7 gelangt, wird der Materialbehälter 19 mit geblähtem Granulat 5 gefüllt, so dass sich eine Materialansammlung 10 ausbildet, die zumindest einen ersten Querschnitt 11 des Materialbehälters 19 ausfüllt. Dadurch kann der Raum, welcher sich im Betriebszustand oberhalb der Materialansammlung 10 befindet, insbesondere der Schacht 3, drucktechnisch von dem Raum, welcher sich im Betriebszustand nach dem Materialbehälter 19 befindet, insbesondere der Förderleitung 7, entkoppelt werden, so dass sich Druckschwankungen in der Förderleitung 7 nicht auf die Schachtströmung 4 auswirken. Der Materialbehälter 19 ist so ausgeführt, dass er im Bereich des Schachtanschlusses 20 zumindest denselben Querschnitt wie der Schacht 3 aufweist, vorzugsweise hat der gesamte obere Bereich des Materialbehälters 19 denselben Querschnitt wie der Schacht 3, welcher insbesondere rechteckig ausgeführt ist.

Die Fig. 2 zeigt, dass durch den unteren Bereich des Materialbehälters 19, der vorzugsweise einen größeren Querschnitt aufweist als der Schacht 3, ein Förderabschnitt 22, welcher vorzugsweise einen kreisrunden Querschnitt aufweist, geführt wird, wobei der größte Durchmesser des Förderabschnittes 22 kleiner ausgebildet ist, als die kleinste Abmessung des Innenraumes des Materialbehälters 19. Der Abstand zwischen der Außenseite des Förderabschnittes 22 und den Innenseiten des Materialbehälters 19 beträgt ein Vielfaches des, aus prozessbezogenen Erfahrungswerten bekannten, größten zu erwartenden Durchmessers einer Granalie des geblähten Granulats 5. In der Regel liegt der Multiplikationsfaktor in einem Bereich zwischen dem 10fachen und 100fachen, vorzugsweise zwischen dem 20fachen und 40fachen. Typische Granaliendurchmesser des geblähten Granulats 5 liegen im Bereich von 0,5 bis 5 mm. Beispielsweise ergibt sich somit bei einem Granaliendurchmesser von 2 mm und einem Faktor von 30 ein Abstand von 2 mm x 30, also 60 mm.

Der Materialbehälter 19 umschließt also zumindest einen Teil des Förderabschnittes 22, vorzugsweise den gesamten Förderabschnitt 22. Der Förderabschnitt 22 berührt also vorzugsweise die Bodenfläche des Materialbehälters 19 und liegt auf diesem auf. Der Förderabschnitt wird quer zur Längsachse 21 des Materialbehälters durch diesen geführt, wobei sich in dieser Variante der Erfindungen die Längsachse 21 mit der Achse des Förderabschnittes 22 in einem Punkt schneiden und der Winkel zwischen den Achsen 90° beträgt. Alternative Ausführungsformen der Erfindung können auch andere Winkel und versetzte Achsen aufweisen. Um den Übergang von geblähten Granulat 5 vom Materialbehälter 19 in den Förderabschnitt zu gewährleisten, ist im Förderabschnitt 22 zumindest eine Öffnung 24 (Fig. 3) angebracht. Diese zumindest eine Öffnung 24 befindet sich in dieser Variante der Erfindung auf der dem Schachtanschluss 20 entgegengesetzten Seite des Förderabschnittes 22 (und zwar auf beiden Seiten des Förderabschnittes 22, hier symmetrisch zur Längsachse 21), also im Betriebszustand auf der unteren Seite, wobei die zumindest eine Öffnung 24 vorzugsweise als eine Mehrzahl an Schlitzen ausgeführt ist. Alternative Ausführungsvarianten sehen vor, dass die zumindest eine Öffnung 24 die Form eines Rechtecks, Quadrates oder Kreises hat. Jedenfalls muss die zumindest eine Öffnung 24 so dimensioniert sein, dass die Granalien mit dem größten Durchmesser, welcher aus prozessbezogenen Erfahrungswerten bekannt ist, noch durch die zumindest eine Öffnung 24 gelangen können, ohne dass eine Verstopfung entsteht. Vorzugsweise liegt das Verhältnis zwischen dem Durchmesser der Granalie und dem Durchmesser der Öffnung 24, zwischen 1:3 und 1:100, besonders bevorzugt zwischen 1:5 und 1:50, insbesondere zwischen 1:5 und 1:25. Beispielsweise ergibt sich bei einem Granaliendurchmesser von 2 mm und einem Verhältnis von 1:5 der Durchmesser der Öffnung 24 mit 2 mm x 5 zu 10 mm.

Im Inneren des Förderabschnittes 22 befindet sich ein Mittel 9 zur Regelung der Fördermenge, welches in dieser Variante als inneres Rohr 25 mit einer Regelklappe 26 ausgeführt ist. Dabei ist der größte Durchmesser des inneren Rohres 25, welches wie der Förderabschnitt 22 vorzugsweise kreisrund ausgeführt ist, kleiner als der kleinste Durchmesser des Förderabschnittes 22 und diese beiden Elemente sind konzentrisch angeordnet. Durch Variation der Querschnitte und der Position des inneren Rohres 25 sind viele alternative Ausführungen denkbar. Das innere Rohr 25 ist ebenfalls, wie der Förderabschnitt 22 und damit die Förderleitung 7, an der dem Förderanschluss 23 entgegenliegenden Seite mit der Atmosphäre verbunden, wodurch Umgebungsluft durch alle zuvor genannten Elemente gesaugt werden kann.

Die Regelklappe 26 ist innerhalb des inneren Rohres 25 angeordnet und vorzugsweise als kreisrunde Platte mit einem Durchmesser ausgebildet, der das Verschließen des inneren Rohres 25 erlaubt. Diese Regelklappe 26 ist drehbar gelagert, so dass sie um eine Achse normal zur Achse des inneren Rohres 25 schwenkbar ist. Diese Schwenkung kann in einem Bereich zwischen einer ersten Position, in der die Regelklappe 26 parallel zur Längsachse des Förderabschnittes 22 steht und einer zweiten Position, in der die Regelklappe 26 normal zur Längsachse des Förderabschnittes 22 steht, stattfinden.

Im Förderabschnitt 22 herrscht dieselbe Förderströmung 8 wie in der Förderleitung 7, welche durch die Absaugeinrichtung 12 (Fig. 1) erzeugt wird. Durch diese Förderströmung 8 wird Granulat 5 aus dem Materialbehälter 19 über die zumindest eine Öffnung 24 in den Förderabschnitt 22 und weiter in die Förderleitung 7 befördert.

Detektiert nun die Messeinrichtung 15 (Fig. 1), welche die Höhe der Materialansammlung 10 im, im Betriebszustand, oberen Teil des Materialbehälters 19 überwacht, eine zu geringe Höhe der Materialansammlung 10, so wird die Regelklappe 26 geöffnet, also in Richtung der ersten Position der Regelklappe 26 geschwenkt. Dadurch wird der durchströmte Querschnitt 27, wenn die zweite Position erreicht ist, gleich groß wie der Durchmesser des inneren Rohres 25 und im gesamten Querschnitt des Förderabschnittes 22 herrscht dieselbe Strömungsgeschwindigkeit der Förderströmung 8. Dadurch geht wenig Granulat 5 vom Materialbehälter 19 in den Förderabschnitt 22 über und die Höhe der Materialansammlung 10 steigt.

Detektiert nun die Messeinrichtung 15 (Fig. 1) eine zu große Höhe der Materialansammlung 10, so wird die Regelklappe 26 geschlossen, also in Richtung der zweite Position der Regelklappe 26 geschwenkt. Dadurch wird der durchströmte Querschnitt 27, wenn die erste Position erreicht ist, minimal, vorzugsweise ganz geschlossen, so dass die Strömungsgeschwindigkeit im kreisringförmigen Bereich zwischen dem inneren Rohr 25 und der Innenseite des Förderabschnittes 22 größer wird, wodurch ein stärkerer Sog erzeugt wird und eine größere Menge an Granulat 5 vom Materialbehälter 19 in den Förderabschnitt 22 über geht und die Höhe der Materialansammlung 10 sinkt.

Dadurch wird gewährleistet, dass die Höhe der Materialansammlung 10 immer in einem definierten Bereich gehalten werden kann, um den Effekt der Entkoppelung der Schachtströmung 4 von der Förderströmung 8 aufrecht zu erhalten.

Dabei wird die Mindesthöhe der Materialansammlung 10 durch die zumindest eine Öffnung 24 bestimmt, welche bei besagter Mindesthöhe überdeckt sein muss. Die eigentliche Höhe der Materialansammlung 10, welche sich im Betrieb einstellt, wird über den Abstand der Messeinrichtung 15 vom Förderabschnitt 22 bestimmt, welcher vorzugsweise 1 cm bis 15 cm beträgt. Die Messeinrichtung 15 (bzw. deren Detektor) sollte also am besten nur geringfügig höher angebracht sein als der äußere Durchmesser des luftdurchströmten Kreisringspaltes (zwischen dem inneren Rohr 25 und der Innenseite des Förderabschnittes 22) zur Ansaugung des geblähten Granulats 5.

### BEZUGSZEICHENLISTE

- 1: sandkornförmiges Rohmaterial
- 2: Mittel zur Beheizung (elektrische Widerstandsheizungen)
- 3: Schacht
- 4: Schachtströmung
- 5: geblähtes Granulat
- 6: Dosierelement
- 7: pneumatische Förderleitung
- 8: Förderströmung
- 9: Mittel zur Regelung
- 10: Materialansammlung
- 11: erster Querschnitt
- 12: Absaugeinrichtung
- 13: Gaszyklon (Trennvorrichtung)
- 14: Wiegeeinrichtung
- 15: Messeinrichtung
- 16: Kopfbereich
- 17: weitere Absaugeinrichtung
- 18: Prozessluft
- 19: Materialbehälter
- 20: Schachtanschluss
- 21: Längsachse
- 22: Förderabschnitt
- 23: Förderanschluss
- 24: Öffnung
- 25: inneres Rohr
- 26: Regelklappe
- 27: durchströmter Querschnitt
- 28: Filteranlage
- 29: weitere Messeinrichtung
- 30: Regelkreis

## Patentansprüche

1. Verfahren zur Expansion von sandkornförmigem Rohmaterial (1), bei dem das Rohmaterial (1) durch einen, mit Mittel (2) zur Beheizung versehenen, im Wesentlichen vertikalen erhitzten Schacht (3), in welchem eine Schachtströmung (4) vorherrscht, nach unten fällt, wobei das Rohmaterial (1) auf Grund der Wärmeübertragung im Schacht (3) zu geblähtem Granulat (5) expandiert und das entstandene Granulat (5) in eine pneumatische Förderleitung (7) mit einer Förderströmung (8) zwecks Weitertransport gelangt, **dadurch gekennzeichnet, dass** zwischen dem Schacht (3) und der Förderleitung (7) ein Dosierelement (6) angebracht ist, in welchem die Menge des Granulats (5) welche vom Schacht (3) in die Förderleitung (7) übergeht über Mittel (9) zur Regelung geregelt wird, so dass eine definierte Materialansammlung (10) des Granulats (5) im Dosierelement (6) als Puffer ausgebildet wird, welche die Schachtströmung (4) von der Förderströmung (8) entkoppelt.

2. Verfahren nach Anspruch 1, **dadurch gekennzeichnet, dass** die Materialansammlung (10), welche als Puffer dient, derart ausgeführt ist, dass zumindest ein erster Querschnitt (11) des Dosierelementes (6) über eine definierte Höhe vollständig mit geblähtem Granulat (5) aus dem Schacht (3) ausgefüllt wird.

3. Verfahren nach Anspruch 1 oder 2, **dadurch gekennzeichnet, dass** die Förderströmung (8) durch eine Absaugeinrichtung (12) erzeugt wird.

4. Verfahren nach einem der Ansprüche 1 bis 3, **dadurch gekennzeichnet, dass** in der Förderleitung (7) eine Trennvorrichtung, vorzugsweise ein Gaszyklon (13), vorgesehen ist, durch welche das geblähte Granulat (5) von der Förderströmung (8) abgeschieden wird.

5. Verfahren nach Anspruch 3, **dadurch gekennzeichnet, dass** die Schüttdichte des Granulats (5) als Qualitätsmerkmal des Expansionsvorganges bestimmt wird, um die Mittel zur Beheizung (2) nach zu regeln oder die Aufgabe von Rohmaterial (1) zu reduzieren.

6. Verfahren nach einem der Ansprüche 1 bis 4, **dadurch gekennzeichnet, dass** das Mittel (9) zur Regelung über eine lokale Beeinflussung der Förderströmung (8) im Dosierelement (6) die Fördermenge des geblähten Granulates (5) in der Förderleitung (7) erhöht oder verringert.

7. Verfahren nach einem der Ansprüche 1 bis 6, **dadurch gekennzeichnet, dass** die Höhe der Materialansammlung (10) im Dosierelement (6) detektiert wird und dass diese Information an das Mittel (9) zur Regelung übermittelt wird.

8. Verfahren nach einem der Ansprüche 1 bis 7, **dadurch gekennzeichnet, dass** Prozessluft (18) aus dem Kopfbereich (16) des Schachtes (3) abgesaugt wird, um den zum Kopfbereich (16) gerichteten Teil der Schachtströmung (4) zu erhöhen und damit zu stabilisieren.

9. Verfahren nach einem der Ansprüche 1 bis 7, **dadurch gekennzeichnet, dass** Prozessluft (18) in den Kopfbereich (16) des Schachtes (3) eingeblasen oder eingesaugt wird, um den zum Kopfbereich (16) gerichteten Teil der Schachtströmung (4) zu stabilisieren.

10. Anlage zur Durchführung eines Verfahrens nach einem der Ansprüche 1 bis 9 mit einem Dosierelement (6) welches mit einem im Wesentlichen vertikalen erhitzbaren Schacht (3) und einer pneumatischen Förderleitung (7) verbunden ist, **dadurch gekennzeichnet, dass** das Dosierelement (6) einen Materialbehälter (19), welcher über einen Schachtanschluss (20) mit dem Schacht (3) verbunden ist und eine Längsachse (21) aufweist, einen Förderabschnitt (22), welcher über einen Förderanschluss (23) mit der Förderleitung (7) verbunden ist, und Mittel (9) zur Regelung umfasst, die so ausgebildet sind, dass im Bereich des Materialbehälters (19) eine Materialansammlung (10) hergestellt wird, wenn Granulat (5) in den Materialbehälter (19) gelangt.

11. Anlage nach Anspruch 10, **dadurch gekennzeichnet, dass** der Förderabschnitt (22) quer zur Längsachse (21) des Schachtes (3) durch den Materialbehälter (19) geführt wird.

12. Anlage nach Anspruch 10 oder 11, **dadurch gekennzeichnet, dass** der Förderabschnitt (22) auf der dem Förderanschluss (23) gegenüberliegenden Seite mit der umgebenden Atmosphäre verbindbar ist.

13. Anlage nach einem der Ansprüche 10 bis 12, **dadurch gekennzeichnet, dass** der Förderabschnitt (22) auf der dem Schachtanschluss (20) entgegengesetzten Seite zumindest eine Öffnung (24) aufweist, um den Übertritt von geblähtem Granulat (5) in den Förderabschnitt (22) zu gewährleisten.

14. Anlage nach einem der Ansprüche 10 bis 13, **dadurch gekennzeichnet, dass** im Bereich des Materialbehälters (19) eine Messeinrichtung (15) angebracht ist, mit welcher die Höhe der Materialansammlung (10) detektiert werden kann und die mit dem Mittel (9) zur Regelung der Fördermenge gekoppelt ist.

15. Anlage nach einem der vorherigen Ansprüche, **dadurch gekennzeichnet, dass** das Mittel (9) zur Regelung der Fördermenge als inneres Rohr (25), welches innerhalb des Förderabschnitts (22) angeordnet ist, mit einer sich darin befindlichen Regelklappe (26) ausgeführt ist.

16. Anlage nach Anspruch 15, **dadurch gekennzeichnet, dass** die Regelklappe (26) so ausgebildet ist, dass sie einerseits verschließbar ist und damit den durchströmten Querschnitt (27) des inneren Rohres (25) verkleinert, wenn eine Überschreitung einer definierten Höhe der Materialansammlung (10) von der Messeinrichtung (15) detektiert wird, um die Fördermenge zu erhöhen und damit die Höhe der Materialansammlung (10) zu verringern, und andererseits öffenbar ist und damit den durchströmten Querschnitt (27) des inneren Rohres (25) vergrößert, wenn eine Unterschreitung einer definierten Höhe der Materialansammlung (10) von der Messeinrichtung (15) detektiert wird, um die Fördermenge zu vermindern und damit die Höhe der Materialansammlung (10) zu vergrößern.

## Claims

1. Method for the expansion of sand grain-shaped raw material (1) in which the raw material (1) drops downwards through a substantially vertical heated shaft (3) provided with means (2) for heating, in which a shaft flow (4) prevails wherein as a result of the heat transfer in the shaft (3) the raw material (1) expands to expanded granulate (5) and the granulate (5) produced enters into a pneumatic conveying line (7) with a conveying flow (8) for further transport, **characterized in that** a dosing element (6) is attached between the shaft (3) and the conveying line (7), in which the quantity of granulate (5) which goes over from the shaft (3) into the conveying line (7) is regulated via means (9) for regulating so that a defined material accumulation (10) of the granulate (5) is formed as a buffer in the dosing element (6), which decouples the shaft flow (4) from the conveying flow (8).

2. The method according to claim 1, **characterized in that** the material accumulation (10) which serves as a buffer is designed in such a manner that at least a first cross-section (11) of the dosing element (6) is filled completely with expanded granulate (5) from the shaft (3) over a defined height.

3. The method according to claim 1 or 2, **characterized in that** the conveying flow (8) is produced by an extraction device (12) .

4. The method according to any one of claims 1 to 3, **characterized in that** a separating device, preferably a gas cyclone (13) is provided in the conveying line (7) by means of which the expanded granulate (5) is separated from the conveying flow (8).

5. The method according to claim 3, **characterized in that** the bulk density of the granulate (5) is determined as a quality feature of the expansion process in order to subsequently regulate the means for heating (2) or reduce the feeding of raw material (1).

6. The method according to any one of claims 1 to 4, **characterized in that** the means (9) for regulating increases or reduces the conveyed quantity of expanded granulate (5) in the conveying line (7) by means of a local influencing of the conveying flow (8) within the dosing element (6).

7. The method according to any one of claims 1 to 6, **characterized in that** the height of the material accumulation (10) in the dosing element (6) is detected and this information is transmitted to the means (9) for regulating.

8. The method according to any one of claims 1 to 7, **characterized in that** process air (18) is extracted from the head region (16) of the shaft (3) in order to increase and thereby stabilize the part of the shaft flow (4) directed to the head region (16).

9. The method according to any one of claims 1 to 7, **characterized in that** process air (18) is blown in or sucked into the head region (16) of the shaft (3) in order to stabilize the part of the shaft flow (4) directed to the head region (16).

10. System for performing a method according to any one of claims 1 to 9 with a dosing element (6) which is connected to a substantially vertical heatable shaft (3) and a pneumatic conveying line (7), **characterized in that** the dosing element (6) comprises a material container (19) which is connected to the shaft (3) via a shaft connection (20) and has a longitudinal axis (21), a conveying section (22) which is connected to the conveying line (7) via a conveying connection (23) and means (9) for regulating which are configured so that a material accumulation (10) is produced in the area of the material container (19) when granulate (5) enters into the material container (19).

11. The system according to claim 10, **characterized in that** the conveying section (22) is guided through the material container (19) transversely to the longitudinal axis (21) of the shaft (3).

12. The system according to claim 10 or 11, **characterized in that** the conveying section (22) can be connected to the ambient atmosphere on the opposite side of the conveying connection (23).

13. The system according to any one of claims 10 to 12, **characterized in that** on the side opposite the shaft connection (20), the conveying section (22) has at least one opening (24) to ensure transfer of expanded granulate (5) into the conveying section (22).

14. The system according to any one of claims 10 to 13, **characterized in that** a measuring device (15) is attached in the area of the material container (19) by means of which the height of the material accumulation (10) can be detected and which is coupled to the means (9) for regulating the conveyed quantity.

15. The system according to any one of the preceding claims, **characterized in that** the means (9) for regulating the conveyed quantity is designed as an inner tube (25) which is disposed inside the conveying section (22) with a butterfly valve (26) located therein.

16. The system according to claim 15, **characterized in that** the butterfly valve (26) is configured so that it can be closed on the one hand and thereby reduces the flow-through cross-section (27) of the inner tube (25) when an exceeding of a defined height of the material accumulation (10) is detected by the measuring device (15) in order to increase the conveyed quantity and thus reduce the height of the material accumulation (10) and on the other hand can be opened and thus increases the flow-through cross-section (27) of the inner tube (25) when a falling below a defined height of the material accumulation (10) is detected by the measuring device (15) in order to reduce the conveyed quantity and thus increase the height of the material accumulation (10).

## Revendications

1. Procédé pour l'expansion de matière première sableuse (1), dans lequel la matière première (1) tombe dans une gaine chauffée (3) sensiblement verticale, munie de moyens (2) de chauffage, où circule un courant de gaine (4), dans lequel la matière première (1) est expansée sous l'effet du transfert de chaleur dans la gaine (3) pour donner des granulés soufflés (5) et les granulés (5) obtenus parviennent dans une conduite de transport pneumatique (7) avec un courant de transport (8) pour être transportés plus loin, **caractérisé en ce qu'**est disposé entre la gaine (3) et la conduite de transport (7) un élément doseur (6) dans lequel la quantité de granulés (5) passant de la gaine (3) à la conduite de transport (7) est régulée par des moyens (9) de régulation de façon à former une accumulation de matériau (10) définie formée de granulés (5) dans l'élément doseur (6) pour servir de tampon découplant le courant de gaine (4) du courant de transport (8).

2. Procédé selon la revendication 1, **caractérisé en ce que** l'accumulation de matériau (10) servant de tampon est réalisée de telle manière qu'au moins une première section (11) de l'élément doseur (6) soit complètement remplie sur une hauteur définie avec des granulés soufflés (5) provenant de la gaine (3).

3. Procédé selon la revendication 1 ou 2, **caractérisé en ce que** le courant de transport (8) est produit par une installation d'aspiration (12).

4. Procédé selon l'une des revendications 1 à 3, **caractérisé en ce qu'**il est prévu dans la conduite de transport (7) un dispositif séparateur, de préférence un cyclone à gaz (13), qui sépare les granulés soufflés (5) du courant de transport (8).

5. Procédé selon la revendication 3, **caractérisé en ce que** la densité apparente des granulés (5) est déterminée pour évaluer la qualité du processus d'expansion, afin d'ajuster les moyens de chauffage (2) ou de réduire l'arrivée de matière première (1).

6. Procédé selon l'une des revendications 1 à 4, **caractérisé en ce que** le moyen (9) de régulation augmente ou réduit le débit de transport des granulés soufflés (5) dans la conduite de transport (7) en influençant localement le courant de transport (8) dans l'élément doseur (6).

7. Procédé selon l'une des revendications 1 à 6, **caractérisé en ce que** la hauteur de l'accumulation de matériau (10) dans l'élément doseur (6) est détectée et **en ce que** cette information est transmise au moyen (9) de régulation.

8. Procédé selon l'une des revendications 1 à 7, **caractérisé en ce que** de l'air de process (18) est aspiré dans la partie de sommet (16) de la gaine (3) afin d'augmenter la partie du courant de gaine (4) dirigée vers la partie de sommet (16) et ainsi de la stabiliser.

9. Procédé selon l'une des revendications 1 à 7, **caractérisé en ce que** de l'air de process (18) est soufflé ou aspiré dans la partie de sommet (16) de la gaine (3) afin de stabiliser la partie du courant de gaine (4) dirigée vers la partie de sommet (16).

10. Installation pour la mise en oeuvre d'un procédé selon l'une des revendications 1 à 9 avec un élément doseur (6) qui est relié à une gaine (3) sensiblement verticale pouvant être chauffée et à une conduite de transport (7) pneumatique, **caractérisée en ce que** l'élément doseur (6) comporte un réservoir de matériau (19) qui est relié à la gaine (3) par un raccord de gaine (20) et qui présente un axe longitudinal (21), une partie de transport (22) qui est reliée par un raccord de transport (23) à la conduite de transport (7) et des moyens (9) de régulation conçus pour créer une accumulation de matériau (10) au niveau du réservoir de matériau (19) quand des granulés (5) arrivent dans le réservoir de matériau (19).

11. Installation selon la revendication 10, **caractérisée en ce que** la partie de transport (22) passe à travers le réservoir de matériau (19) transversalement par rapport à l'axe longitudinal (21) de la gaine (3).

12. Installation selon la revendication 10 ou 11, **caractérisée en ce que** la partie de transport (22) peut être raccordée à l'atmosphère ambiante du côté opposé au raccord de transport (23).

13. Installation selon l'une des revendications 10 à 12, **caractérisée en ce que** la partie de transport (22) présente au moins une ouverture (24) du côté opposé au raccord de gaine (20) pour garantir le passage des granulés soufflés (5) dans la partie de transport (22).

14. Installation selon l'une des revendications 10 à 13, **caractérisée en ce qu'**est installée au niveau du réservoir de matériau (19) une installation de mesure (15) avec laquelle la hauteur de l'accumulation de matériau (10) peut être détectée et qui est couplée au moyen (9) de régulation du débit.

15. Installation selon l'une des revendications précédentes, **caractérisée en ce que** le moyen (9) de régulation du débit est réalisé comme un tuyau interne (25) disposé à l'intérieur de la partie de transport (22) et dans lequel est placé un clapet de régulation (26).

16. Installation selon la revendication 15, **caractérisée en ce que** le clapet de régulation (26) est conçu de manière à pouvoir, d'une part, être fermé pour réduire la section de passage (27) du tuyau interne (25) quand l'installation de mesure (15) détecte un dépassement d'une hauteur définie de l'accumulation de matériau (10), afin d'augmenter le débit de transport et de réduire ainsi la hauteur de l'accumulation de matériau (10) et, d'autre part, à pouvoir être ouvert pour augmenter ainsi la section de passage (27) du tuyau interne (25) quand l'installation de mesure (15) détecte qu'une hauteur définie de l'accumulation de matériau (10) n'est pas atteinte, afin de réduire le débit de transport et d'accroître ainsi la hauteur de l'accumulation de matériau (10).
